**Europäisches Patentamt**

(19) **European Patent Office**

**Office européen des brevets**

(11) Veröffentlichungsnummer: **0 069 274**
**B1**

(12) **EUROPÄISCHE PATENTSCHRIFT**

(45) Veröffentlichungstag der Patentschrift:
26.09.84

(21) Anmeldenummer: 82105488.9

(22) Anmeldetag: 22.06.82

(51) Int. Cl.³: **B 23 F   5/08**

(54) **Wälzgetriebe bei einer Verzahnungsmaschine für Evolventenverzahnung.**

(30) Priorität: 07.07.81 DE 3126768

(43) Veröffentlichungstag der Anmeldung:
12.01.83 Patentblatt 83/02

(45) Bekanntmachung des Hinweises auf die Patenterteilung: 26.09.84 Patentblatt 84/39

(84) Benannte Vertragsstaaten:
AT CH FR GB IT LI NL SE

(56) Entgegenhaltungen:
CH-A-   418 784
DE-A- 2 009 593
DE-A- 2 840 940
DE-B- 1 221 531

(73) Patentinhaber: BHS-Dr. Ing. Höfler Maschinenbau
Gmbh
Industriestrasse 19
D-7505 Ettlingen-Oberweier (DE)

(72) Erfinder: van de Löcht, Heinrich, Dr. Dr.-Ing.
Nelkenstrasse 3
D-7502 Malsch-2 (DE)

(74) Vertreter: Eder, Eugen, Dipl.-Ing. et al
Patentanwälte Dipl.-Ing. E. Eder Dipl.-Ing. K. Schieschke Elisabethstrasse 34
D-8000 München 40 (DE)

## Beschreibung

Die Erfindung bezieht sich auf ein Wälzgetriebe an einer Verzahnungsmaschine für Evolventenverzahnung mit einer bezüglich der Wälzbewegung ortsfesten Schleifscheibe, mit einem hin- und herverschiebbaren, auf einem Maschinenbett gelagerten Hauptschlitten und einem darauf geführten, hin- und herbewegbaren Hilfsschlitten, welcher mit einem in einer winkeleinstellbaren Führungsbahn am Maschinenbett gleitend bewegbaren Kulissenelement verbunden ist, wobei der Hilfsschlitten über einen Bandantrieb einen Rollbogen antreibt, welcher mit einem Werkstücktisch in Verbindung steht und mit mindestens einem Wälzgetriebeantrieb.

Als Stand der Technik ist bereits ein für verschiedene Grundkreisdurchmesser einstellbares Wälzgetriebe der vorgenannten Art bekannt (DE-PS-2 009 593). Hierbei ist ein zur Erzeugung der Wälzbewegung auf dem Maschinenständer hin- und herverschiebbarer Hauptschlitten sowie ein auf seiner Unterlage quer zu dem Hauptschlitten hin- und herverschiebbarer Hilfsschlitten vorgesehen. Sowohl der Hauptschlitten als auch der Hilfsschlitten sind wahlweise mittels Spindeln antreibbar. Der Hauptschlitten bringt den translatorischen Anteil der Wälzbewegung in das System ein, wobei zur Erzeugung des rotatorischen Anteils der Wälzbewegung der Hilfsschlitten mit einer um eine Drehachse schräg einstellbaren Führungsbahn mit einem darin gleitend aufgenommenen Kulissenstein zusammenwirkt. Dieser Kulissenstein ist mit dem Hilfsschlitten verbunden und in einer Führungsbahn hin- und herverschiebbar. Das zu bearbeitende bzw. zu messende Werkstück wird über einen Rollbogen um einen durch die jeweils eingestellte Schräglage der Führungsbahn bestimmten Bogenweg gedreht. Dieser Rollbogen ist mit dem Hilfsschlitten verbunden, wohingegen die schräg einstellbare Führungsbahn am Maschinenbett angeordnet ist.

Bei dieser bekannten Ausführungsform ist die Führungsbahn des Hilfsschlittens in genau rechtwinkliger Position zum Verschiebeweg des Hauptschlittens angeordnet. Um die verschiedenen Grundkreisdurchmesser erfassen zu können, wird die Winkellage der Führungsbahn auf einen rechnerisch vorherbestimmten Wert eingestellt, damit die zur Evolventenverzahnung notwendige Abwälzbewegung des zu bearbeitenden Werkstückes gewährleistet ist. Nachteilig ist hierbei das relativ geringe Auflösungsvermögen bei Einstellung des jeweils gewünschten Grundkreisdurchmessers. So benötigt man beispielsweise zur Veränderung des Grundkreisdurchmessers vom Rollbogenkreis von Null bis unendlich 90°.

Aufgabe der vorliegenden Erfindung ist es nun, ein Wälzgetriebe der eingangs genannten Art so auszubilden, daß auf einfache Weise eine Steigerung des Auflösungsvermögens bei Einstellung des betreffenden Grundkreisdurchmessers ermöglicht wird.

Diese Aufgabe wird erfindungsgemäß dadurch gelöst, daß der Verschiebeweg des Hilfsschlittens schräg zum Verschiebeweg des Hauptschlittens verläuft. Hierdurch ergibt sich infolge der Schrägstellung der Führung des Hilfsschlittens auf einfache Weise ein wesentlich verbessertes Auflösungsvermögen bei der Einstellung des zu wählenden Grundkreisdurchmessers.

Optimale Verhältnisse liegen in weiterer Ausgestaltung der Erfindung dann vor, wenn der Verschiebeweg des Hilfsschlittens im Winkel von 45° zum Verschiebeweg des Hauptschlittens verläuft, hierbei wird das Auflösungsvermögen um den Faktor $\sqrt{2}$ größer.

Nach weiteren Ausführungsmöglichkeiten der Erfindung können der Hilfsschlitten mit dem Wälzgetriebeantrieb bzw. der Werkstücktisch mit dem Wälzgetriebeantrieb oder der Hauptschlitten mit dem Wälzgetriebeantrieb verbunden sein.

Weiterhin ist es möglich, daß über zwei Wälzgetriebe wahlweise der Hilfsschlitten oder der Hauptschlitten bzw. der Hauptschlitten oder der Werkstücktisch antreibbar sind.

Nach einem anderen Merkmal der Erfindung können mit dem Hilfsschlitten und dem Hauptschlitten je ein Längsgeber bzw. mit dem Hauptschlitten ein Längsgeber und mit dem Werkstücktisch ein Winkelgeber verbunden sein. Hierdurch ergibt sich in vorteilhafter Weise im Zusammenwirken mit den einzelnen Gebern und der winkeleinstellbaren Führungsbahn des Kulissenelementes eine exakte Einstellung des Grundkreisdurchmesser.

Nach einem anderen Merkmal der Erfindung kann der Hilfsschlitten ein zwischen zwei Anschlägen verschiebbares und feststellbares Element zur Spanzustellung aufweisen, wobei die gesamte Einheit zur Durchführung der Teilung zwischen zwei Anschlägen verschiebbar und feststellbar ist und Werkstücktisch und Rollbogen jeweils mit einer Kupplung versehen sind. Beide Anschläge können justierbar ausgebildet sein, wobei nach einem anderen Merkmal der Erfindung die Kupplung jeweils aus einem von einem Medium beaufschlagbaren Membranring besteht, welcher mit einer Lamelle in Wirkverbindung steht. Hierdurch ergibt sich auf einfache Weise die Möglichkeit der Spanzustellung, des Spielausgleichs sowie die spielfreie Durchführung der Teilung.

Die Erfindung wird nachfolgend anhand von in der Zeichnung dargestellten Ausführungsbeispielen näher beschrieben. In der Zeichnung zeigen :

Figur 1 eine schematische Grundkonstruktion des Wälzgetriebes in Draufsicht;

Figur 2 eine schematische Draufsicht auf das Wälzgetriebe mit antreibbarem Hilfsschlitten ;

Figur 3 eine schematische Draufsicht auf das Wälzgetriebe mit antreibbarem Werkstücktisch ;

Figur 4 eine schematische Draufsicht auf das Wälzgetriebe mit antreibbarem Hauptschlitten ;

Figur 5 eine schematische Draufsicht auf das Wälzgetriebe mit antreibbarem Hauptschlitten und antreibbarem Hilfsschlitten ;

Figur 6 eine schematische Draufsicht auf das Wälzgetriebe mit angetriebenem Hauptschlitten und angetriebenem Werkstücktisch ;

Figur 7 eine schematische Draufsicht auf das Wälzgetriebe mit Längsgebern am Hauptschlitten und am Hilfsschlitten ;

Figur 8 eine schematische Draufsicht auf das Wälzgetriebe mit Winkelgeber am Werkstücktisch und Längsgeber am Hauptschlitten ;

Figur 9 eine schematische Ansicht des Hilfsschlittens mit Elementen zur Spanzustellung, zum Spielausgleich und zur spielfreien Durchführung der Teilung ;

Figur 10 einen Schnitt gemäß der Linie X-X in Fig. 9 ;

Figuren 11 und 12 zwei schematische Darstellungen der Kupplung des Werkstücktisches im Seitenschnitt.

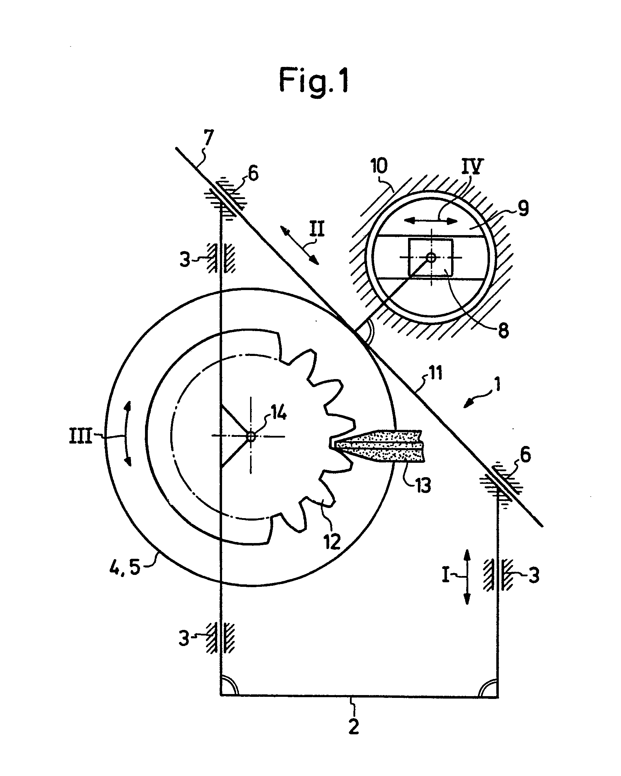

Nach Fig. 1 besteht das Wälzgetriebe 1 im wesentlichen aus einem Hauptschlitten 2 und einem Hilfsschlitten 7. Der Hauptschlitten 2 ist hierbei in Führungen 3 am Maschinenbett in Pfeilrichtung I hin- und herbewegbar. Dieser Hauptschlitten 2 weist Führungen 6 auf, in welchen der Hilfsschlitten 7 schräg zur Bewegungsrichtung des Verschiebeweges I bewegt wird, so daß sich der Verschiebeweg II für den Hilfsschlitten 7 ergibt. Dieser Hilfsschlitten ist mit einem Kulissenelement 8 verbunden, das in einer Führungsbahn 9 bewegbar ist. Die Führungsbahn 9 ist winkeleinstellbar im Maschinenbett 10 angeordnet. Weiterhin weist der Hilfsschlitten 7 einen Bandantrieb 11 auf, welcher mit einem Rollbogen 4 zusammenwirkt. Dieser Rollbogen 4 ist um seine Achse 14 drehbar auf dem Hauptschlitten 2 gelagert. Koaxial auf der Achse befindet sich ein Werkstücktisch 5, auf welchem ein zu bearbeitendes Zahnrad 12 angeordnet ist. Im vorliegenden Fall ist hierzu eine Schleifscheibe 13 vorgesehen, welche die Evolventenverzahnung dieses Zahnrades erzeugt. Bei Bewegung des Hilfsschlittens 7 gemäß seinem Verschiebeweg II bewegt sich das Kulissenelement 8 in der Führungsbahn 9 entsprechend seinem Verschiebeweg IV. Durch Zusammenwirken der Bewegungen der Verschiebewege I, II und IV ergibt sich über den Bandantrieb 11 eine Drehung des Rollbogens 4 in Richtung III. Vorzugsweise ist der Verschiebeweg II des Hilfsschlittens 7 im Winkel von 45° zum Verschiebeweg I des Hauptschlittens 2 angeordnet.

Die Wirkungsweise dieses Wälzgetriebes ist folgende : Bei der Verschiebung des Hauptschlittens 2 entsteht eine Relativbewegung zwischen dem an dem Hilfsschlitten 7 angeordneten Kulissenelement 8 und der Führungsbahn 9. Hierbei erfährt das Kulissenelement 8 und damit auch der Hilfsschlitten 7 eine von der Winkellage der Führungsbahn 9 abhängige Bewegung entlang des Verschiebeweges IV, welche über den in den Führungen 6 angeordneten Hilfsschlitten sowie den Bandantrieb 11 auf den Rollbogen 4 übertragen wird. Damit kommt es zu einer Verdrehung des Rollbogens 4 und damit auch des Zahnrades 12. Durch diese Abrollbewegung des Werkstückes, d. h. des Zahnrades 12 an der geraden Flanke der Schleifscheibe 13 entsteht damit eine exakte Evolvente.

Die Größe des Grundkreisdurchmessers bestimmt sich hierbei durch die einstellbare Winkellage der Führungsbahn 9 im Maschinenbett 10.

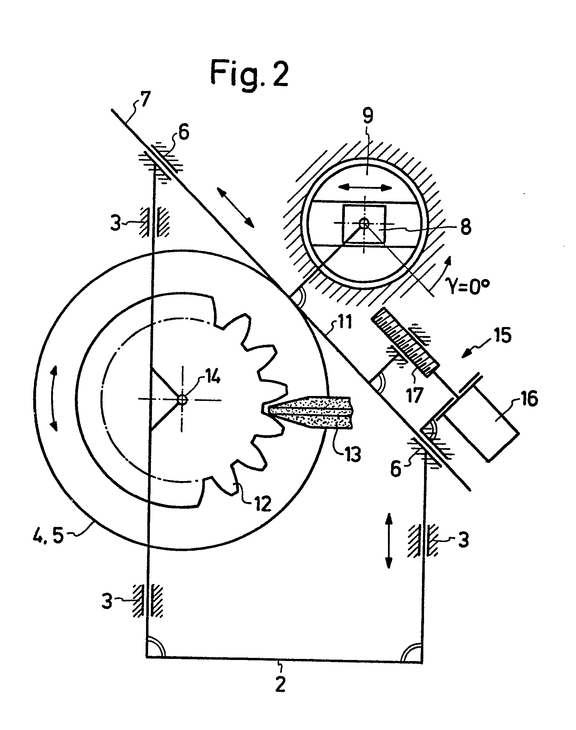

Während in Fig. 1 der Antrieb des Wälzgetriebes nicht näher dargestellt ist, läßt Fig. 2 erkennen, daß bei dieser Ausführungsform beispielsweise der Hilfsschlitten 7 mit einem Antrieb 15 versehen sein kann, welcher aus einem Motor 16 sowie einer Gewindespindel 17 besteht. Bei dieser Ausführungsform erfolgt also der Antrieb des Wälzgetriebes über den Hilfsschlitten 7, welcher infolge seiner wirkungsmäßigen Verbindung mit dem Hauptschlitten 2 über die schrägen Führungen 6 sowie über das Kulissenelement 8 mit der Führungsbahn 9 und den Bandantrieb 11 mit dem Rollbogen 4 diese Bewegung in funktionsrichtiger Weise auf das Zahnrad 12 überträgt. Bei dieser Ausführungsform kann der Betrag des Winkels γ zwischen Null und 67,5° betragen.

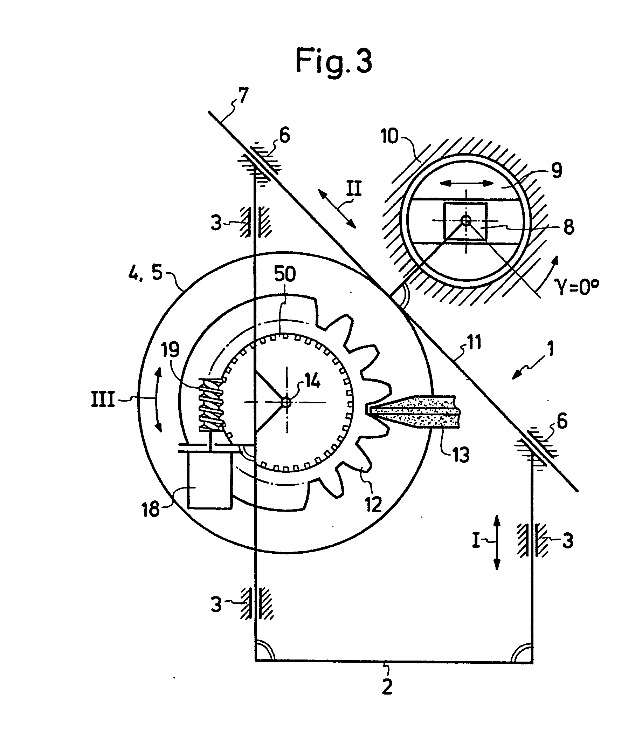

Bei der Ausführungsform gemäß Fig. 3 erfolgt der Antrieb des Wälzgetriebes 1 über einen Motor 18 sowie eine Schnecke 19, welche mit einem Schneckenrad 50 zusammenwirkt, das mit dem Rollbogen 4 sowie mit dem Werkstücktisch 5 auf der gleichen Achse 14 sitzt. Auch hier kann der Betrag des Winkels γ zwischen Null und 67,5° liegen, d. h. die Einstellung der Führungsbahn 9 gegenüber dem Maschinenbett 10 kann in diesem Bereich erfolgen.

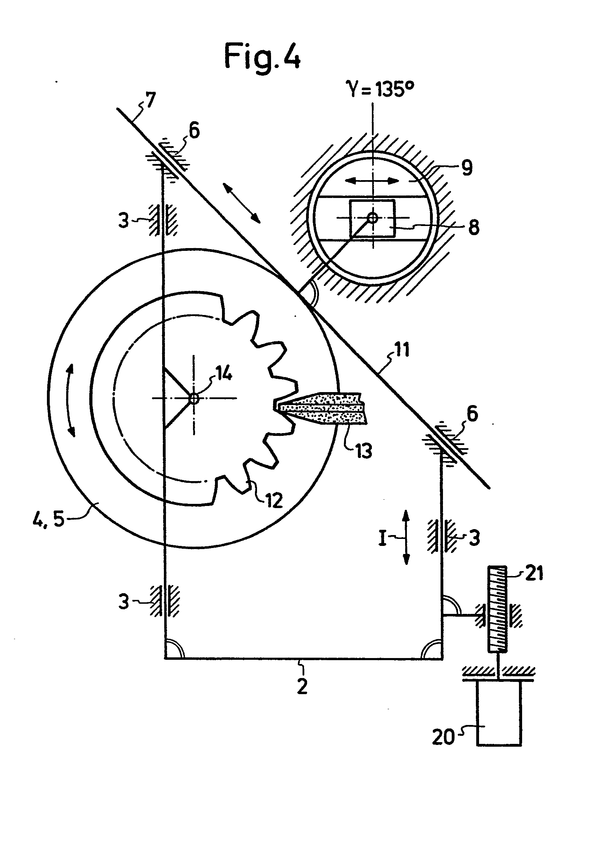

Bei dem Ausführungsbeispiel nach Fig. 4 wird über einen Motor 20 sowie eine Gewindespindel 21 der Hauptschlitten 2 auf dem Verschiebeweg I in seinen Führungen 3 bewegt. Hier liegt der Winkel γ zwischen 67,5 und 135°.

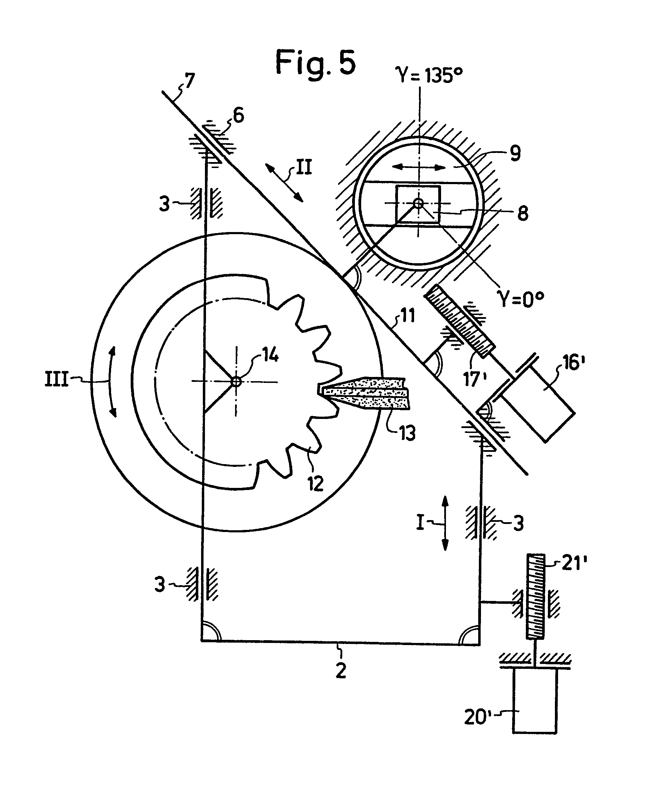

In dem Ausführungsbeispiel nach Fig. 5 sind zwei Antriebe vorgesehen, nämlich der Hilfsschlittenantrieb 16' und 17' für den Hilfsschlitten 7 bezüglich seines Verschiebeweges II und der Hauptschlittenantrieb 20' und 21' für den Hauptschlitten 2 bezüglich seines Verschiebeweges I. Mit wachsendem Grundkreisdurchmesser erreicht nämlich der Winkel γ einen Wert, bei welchem die Selbsthemmungskräfte am Kulissenelement 8 eine Drehbewegung des Zahnrades 12 über den Hilfsschlitten 7 und den Bandantrieb 11 nicht mehr zulassen. Daher muß bei Durchmesserverhältnissen, bei denen der Winkel γ an der Führungsbahn in einen Bereich kommt, in welchem zu große Selbsthemmungskräfte auftreten, die Einleitung der Bewegung geändert werden. Im Bereich von γ = Null° bis 67,5° wirkt hierbei allein der Hilfsschlittenantrieb 16' und 17', wobei der Hauptschlittenantrieb 20' und 21' abgekuppelt ist. Wird zur Änderung von Grundkreisdurchmessern ein Wert über 67,5° erforderlich, so kuppelt man den Hilfsschlittenantrieb 16' und 17' aus und wählt stattdessen den Antrieb über den Hauptschlitten 2 mit Hilfe der Gewindespindel 21' und des Motors. Diese Verhältnisse liegen dann vor, wenn der Winkel γ in dem Wert zwischen 67,5° und 135° liegt. Der Antrieb des Hilfsschlittens 7 erfolgt also für den Winkel γ in dem Bereich zwischen Null° und 67,5°, wohingegen der Antrieb des Hauptschlittens 2 für den Bereich des Winkels γ im Bereich zwischen 67,5° und 135° erfolgt. Hierzu sind die beiden Antriebe 16', 17' bzw. 20' und 21' wahlweise kuppelbar.

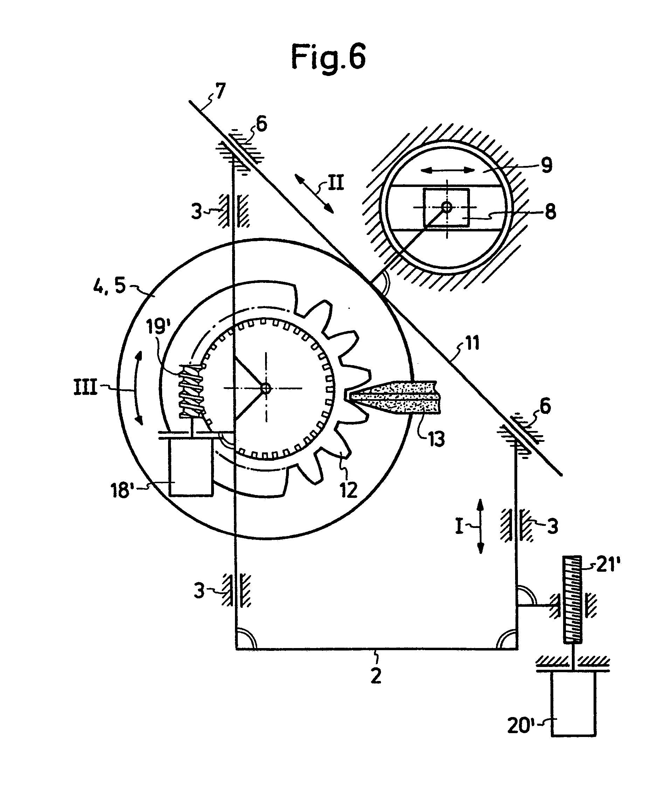

Nach dem Ausführungsbeispiel nach Fig. 6 besteht auch die Möglichkeit, einen Hauptschlittenantrieb 20' und 21' für den Hauptschlitten 2 und einen Werkstücktischantrieb 18' und 19' für den Werkstücktisch 5 vorzusehen. Liegt der Winkel γ zwischen Null und 67,5°, so bewirkt der Motor 18' mit der Gewindespindel 19' den Antrieb des Wälzgetriebes. Vergrößert sich jedoch der Winkel γ bei geändertem Grundkreisdurchmesser in den Bereichen zwischen 67,6° und 135°, so wird der Werkstücktischantrieb 18' und 19' abgekuppelt und stattdessen der Hauptschlittenantrieb 20' und 21' in Wirkverbindung mit dem Hauptschlitten 2 gebracht.

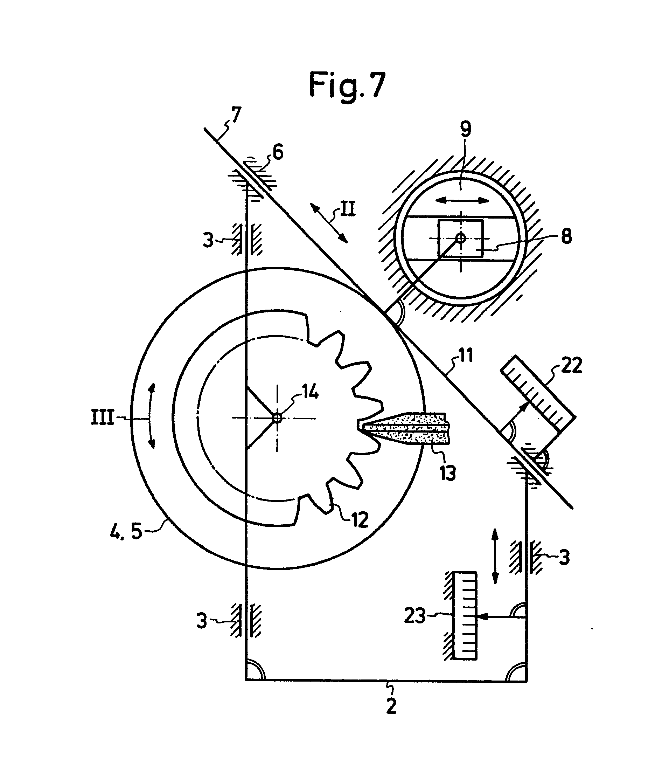

Wie vorstehend ausgeführt, ist der Ausgangspunkt für die Größe des Grundkreises bei der Herstellung der betreffenden Evolvente die Winkeleinstellung der Führungsbahn 9 zur Führung des Kulissenelementes 8. Um diese Winkeleinstellung sehr genau ermitteln zu können, besteht nach Fig. 7 die Möglichkeit, daß der Hilfsschlitten 7 mit einem Längsgeber 22 und der Hauptschlitten 2 mit einem Längsgeber 23 verbunden ist. Der Grundkreisdurchmesser ermittelt sich daher aus zwei Weganteilen, nämlich dem Translationsweg des Hauptschlittens 2 und dem Translationsweg des Hilfsschlittens 7. Beide Wege werden beispielsweise über nicht näher dargestellte Rechner zur Ermittlung des Wälzkreisdurchmessers entsprechend dem Grundkreisdurchmesser verarbeitet. Hierbei wird über die beiden Längsgeber 22 und 23 so lange eine Korrektur an der Einstellung der Kulissenführungsbahn 9 durchgeführt, bis der tatsächlich gewünschte und angezeigte Grundkreisdurchmesser mit dem Grundkreisdurchmesser des herzustellenden Werkstückes übereinstimmt.

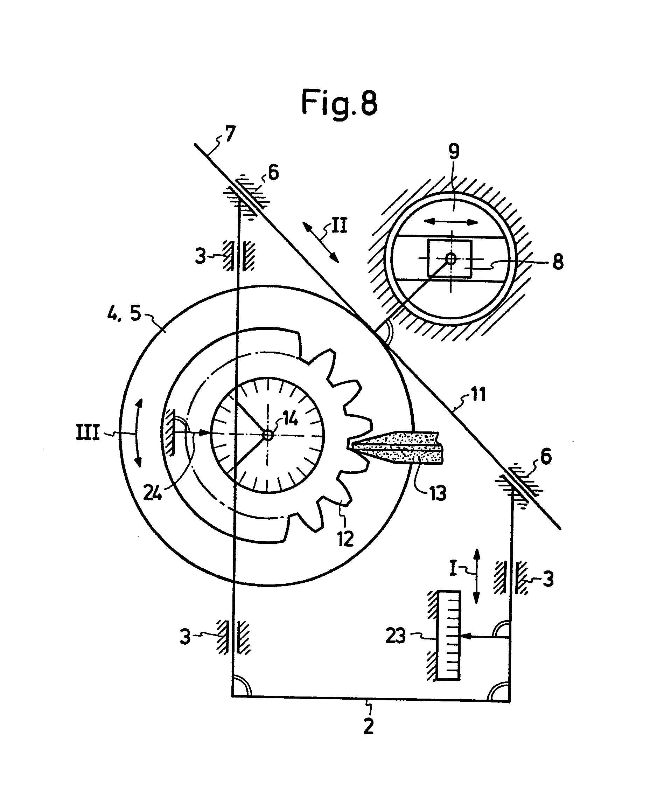

Nach Fig. 8 besteht auch die Möglichkeit, am Hauptschlitten 2 einen Längsgeber 23 und am Werkstücktisch 5 einen Winkelgeber 24 vorzusehen. Hierbei liegen wiederum zwei Bewegungen vor, nämlich die Translation des Hauptschlittens 2 und die Rotation des Werkstücktisches 5. Wiederum werden über Rechengrößen die erhaltenen Werte zur Ermittlung des Wälzkreisdurchmessers verarbeitet und so lange eine Korrektur an der Einstellung der Kulisse 9 durchgeführt, bis der gewünschte Grundkreisdurchmesser ermittelt worden ist.

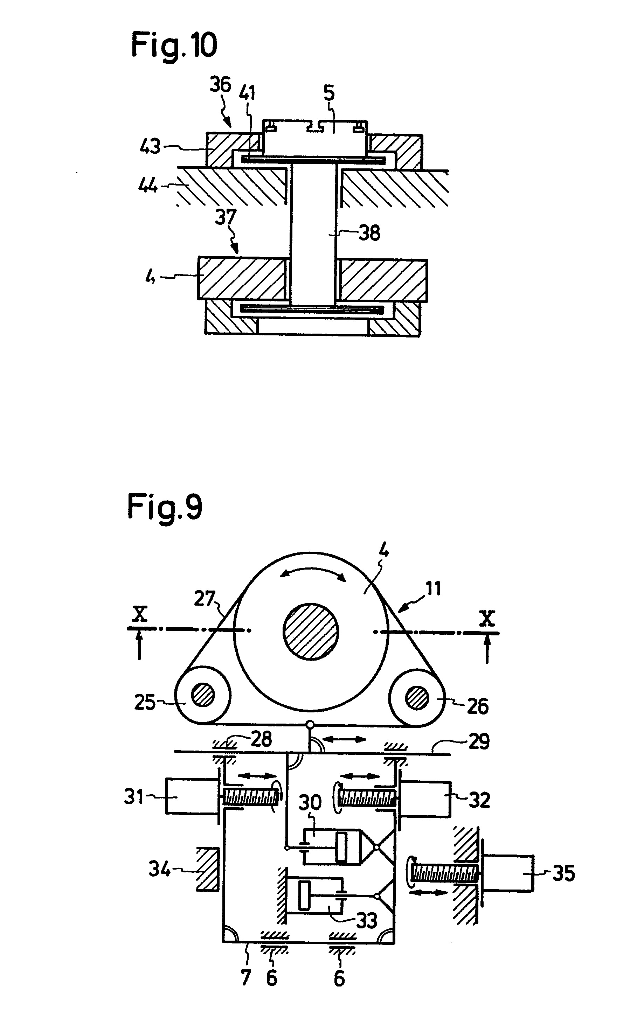

In Fig. 9 ist eine andere Ausführungsmöglichkeit des Hilfsschlittens 7 dargestellt. Hierbei ist dieser Hilfsschlitten 7 über ein Element 29 mit einem Spannband 27 verbunden, welches seinerseits über die Umlenkrollen 25 und 26 läuft und den Rollbogen 4 antreibt. Diese vorgenannten Elemente bilden damit den Bandantrieb 11. Das Element 29 ist in Führungen 28 des Hilfsschlittens 7 bewegbar, wobei ein Antrieb 30 vorgesehen ist, so daß durch Verstellung dieses Antriebes entweder nach links oder nach rechts eine Spanzustellung bzw. eine Bearbeitung der linken oder rechten Flanke des Zahnrades 12 erfolgt, wobei der Rollbogen 4 nicht vom Tisch 5 abgekuppelt ist.

Wird nun der Rollbogen 4 vom Tisch 5 abgekuppelt, so läßt sich die gesamte Einheit 7, 29 z. B. vom Teilanschlag 34 zum Teilanschlag 35 über den Antrieb 33 verfahren. Nunmehr werden Rollbogen 4 und Tisch 5 wieder miteinander gekuppelt und die Einheit 7, 29 zum Teilanschlag 34 zurückgefahren, wodurch der Tisch 5 eine Drehung erfährt.

Hierdurch erfolgt auf einfache Weise lediglich im Zusammenwirken zwischen den verschiedenen Elementen des Hilfsschlittens und des Bandantriebes eine Durchführung der Teilung, d. h. das Zahnrad 12 wird um einen Teilschritt weitergedreht.

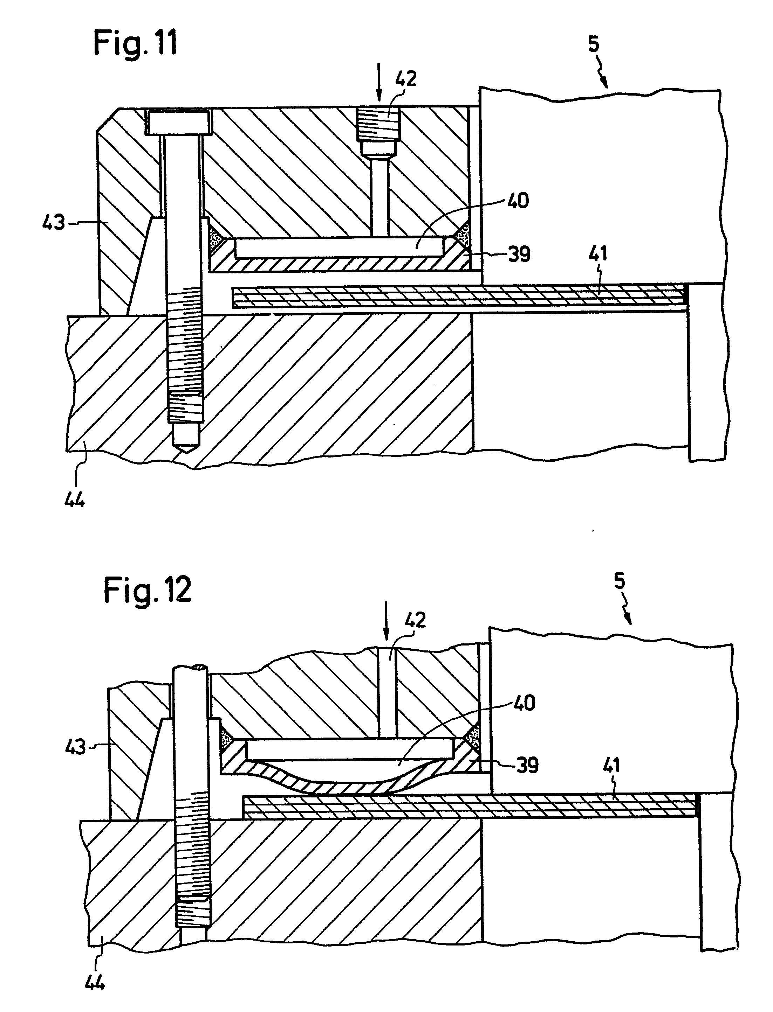

Die hierbei verwendete Kupplung ist in Fig. 10 bzw. 11 und 12 näher dargestellt. Eine Antriebswelle 38 ist mit dem Werkstücktisch 5 bzw. dem Rollbogen 4 verbindbar. Nach Fig. 11 und 12 ist hierbei ein Gehäuseoberteil 43 sowie ein Gehäuseunterteil 44 vorgesehen. An dem Gehäuseoberteil befindet sich eine Arbeitskammer 40, welche durch einen Membranring 39 verschlossen ist. Unterhalb des Membranringes befindet sich eine Lamelle, die mit der Welle 38 gemäß Fig. 10 zum Antrieb des Tisches 5 bzw. des Rollbogens 4 in Verbindung steht. Wird nun gemäß Fig. 11 über eine Drucköl leitung 42 Drucköl in die Arbeitskammer 40 eingeleitet, so wölbt sich der Membranring 39 gemäß Fig. 12, so daß eine Anpressung an die Lamelle 41 gegeben ist. Durch diese Anpressung erfolgt ein Antrieb des Werkstücktisches 5 bzw. des Rollbogens 4 auf einfache Weise. Wird der Druck über die Ölleitung 42 wieder aufgehoben, so kehrt der Membranring 39 in seine Ausgangslage gemäß Fig. 11 zurück und die Kupplung ist wieder gelöst.

Insgesamt ergibt sich, daß ein Wälzgetriebe geschaffen wird, welches auf einfache Weise eine Steigerung der Auflösung bei der Einstellung des Grundkreisdurchmessers bewirkt. Durch die spezielle Gestaltung des Hilfsschlittens läßt sich die Teilung durchführen, wobei auf einfache Weise Spanzustellung und Spielausgleich sowie die Herstellung der rechten und linken Flanke bewirkt werden können.

**Ansprüche**

1. Wälzgetriebe an einer Verzahnungsmaschine für Evolventenverzahnung mit einer bezüglich der Wälzbewegung ortsfesten Schleifscheibe, mit einem hin- und herverschiebbaren, auf einem Maschinenbett (10) gelagerten Hauptschlitten (2) und einem darauf geführten, hin- und herbewegbaren Hilfsschlitten (7), welcher mit einem in einer winkeleinstellbaren Führungsbahn (9) am Maschinenständer gleitend bewegbaren Kulissenelement (8) verbunden ist, wobei der Hilfsschlitten (7) über einen Bandantrieb (11) einen Rollbogen (4) antreibt, welcher mit einem Werkstücktisch (5) in Verbindung steht und mit mindestens einem Wälzgetriebeantrieb, dadurch gekennzeichnet, daß der Verschiebeweg (II) des Hilfsschlittens (7) schräg zum Verschiebeweg (I) des Hauptschlittens (2) verläuft.

2. Wälzgetriebe nach Anspruch 1, dadurch gekennzeichnet, daß der Verschiebeweg (II) des Hilfsschlittens (7) im Winkel von 45° zum Verschiebeweg (I) des Hauptschlittens (2) verläuft.

3. Wälzgetriebe nach Anspruch 1 und 2, dadurch gekennzeichnet, daß der Hilfsschlitten (7) mit dem Wälzgetriebeantrieb (15, 16, 17) verbunden ist (Fig. 2).

4. Wälzgetriebe nach Anspruch 1 und 2, dadurch gekennzeichnet, daß der Werkstücktisch (5) mit dem Wälzgetriebeantrieb (18, 19) verbunden ist (Fig. 3).

5. Wälzgetriebe nach Anspruch 1 und 2, dadurch gekennzeichnet, daß der Hauptschlitten (2) mit dem Wälzgetriebeantrieb (20, 21) verbunden ist (Fig. 4).

6. Wälzgetriebe nach Anspruch 1 und 2, dadurch gekennzeichnet, daß über zwei Wälzantriebe (16', 17', 20', 21') wahlweise der Hilfsschlitten (7) oder der Hauptschlitten (2) antreibbar sind (Fig. 5).

7. Wälzgetriebe nach Anspruch 1 und 2, dadurch gekennzeichnet, daß über zwei Wälzantriebe (18', 19' ; 20', 21') wahlweise der Hauptschlitten (2) oder der Werkstücktisch (5) antreibbar sind (Fig. 6).

8. Wälzgetriebe nach einem der vorhergehenden Ansprüche, dadurch gekennzeichnet, daß mit dem Hilfsschlitten (7) und dem Hauptschlitten (2) je ein Längsgeber (22, 23) verbunden ist (Fig. 7).

9. Wälzgetriebe nach einem der Ansprüche 1 bis 7, dadurch gekennzeichnet, daß mit dem Hauptschlitten (2) ein Längsgeber (23) und mit dem Werkstücktisch (5) ein Winkelgeber (24) verbunden ist (Fig. 8).

10. Wälzgetriebe nach einem der vorhergehenden Ansprüche, dadurch gekennzeichnet, daß der Hilfsschlitten (7) ein zwischen zwei Anschlägen (31, 32) verschiebbares und feststellbares Element (29) zur Spanzustellung aufweist, daß die gesamte Einheit zwischen zwei Anschlägen (34, 35) verschiebbar und feststellbar ist zur Durchführung der Teilung und daß der Werkstücktisch (5) und der Rollbogen (4) jeweils mit einer Kupplung (36, 37) versehen sind (Fig. 9 bis 11).

11. Wälzgetriebe nach Anspruch 10, dadurch gekennzeichnet, daß die Anschläge justierbar sind.

12. Wälzgetriebe nach Anspruch 10, dadurch gekennzeichnet, daß die Kupplung (36 ; 37) jeweils aus einem von einem Medium beaufschlagbaren Membranring (39) besteht, welcher mit einer Lamelle (41) in Wirkverbindung steht (Fig. 11, 12).

## Claims

1. Generating mechanism for a gear cutting machine for cutting involute gears comprising a grinding disc which is stationary with respect to the generating motion, a main carriage (2) which is mounted on a machine base (10) and can be shifted to and fro and an auxiliary carriage (7) which is guided thereon, which can be moved to and fro which is connected to a slide element (8) which is slidingly movable in an angularly-adjustable guideway (9) on a machine column, in which respect the auxiliary carriage (7) drives, by way of a belt drive (11), arotary disc (4) which communicates with a workpiece table (5) and with at least one rolling gear drive means, characterised in that the path of displacement (II) of the auxiliary carriage (7) extends obliquely to the path of displacement (1) of the main carriage (2).

2. Generating mechanism according to claim 1, characterised in that the path of displacement (II) of the auxiliary carriage (7) extends at the angle of 45° to the path of displacement (1) of the main carriage (2).

3. Generating mechanism according to claim 1 and 2, characterised in that the auxiliary carriage (7) is connected to the rolling gear drive means (15, 16, 17) (Fig. 2).

4. Generating mechanism according to claim 1 and 2, characterised in that the workpiece table (5) is connected to the rolling gear drive means (18, 19) (Fig. 3).

5. Generating mechanism according to claim 1 and 2, characterised in that the main carriage (2) is connected to the rolling gear drive means (20, 21) (Fig. 4).

6. Generating mechanism according to claim 1 and 2, characterised in that the auxiliary carriage (7) or the main carriage (2) are selectively drivable by way of two rolling gear drive means (16', 17', 20', 21') (Fig. 5).

7. Generating mechanism according to claim 1 and 2, characterised in that the main carriage (2) or the workpiece table (5) are selectively drivable by way of two rolling gear drive means (18', 19', 20', 21') (Fig. 6).

8. Generating mechanism according to one of the preceding claims, characterised in that respective length determining devices (22, 23) are connected to the auxiliary carriage (7) and the main carriage (2) (Fig. 7).

9. Generating mechanism according to one of claims 1 to 7, characterised in that a length determining device (23) is connected to the main carriage (2) and an angle measuring device (24) is connected to the workpiece table (5) (Fig. 8).

10. Generating mechanism according to one of the preceding claims, characterised in that the auxiliary carriage (7) has a feed element (29) which is displaceable and securable between two stops (31, 32), in that the entire unit is displaceable and securable between two stops (34, 35) so as to permit pitch graduation and in that the workpiece table (5) and the rotary disc (4) are each provided with a clutch (36, 37) (Figs. 9 to 11).

11. Generating mechanism according to claim 10, characterised in that the stops are adjustable.

12. Generating mechanism according to claim 10, characterised in that each clutch (36, 37) consists of a diaphragm ring (39) which can be acted upon by a medium so as to be brought into operative connection with a lamella (41) (Figs. 11, 12).

## Revendications

1. Mécanisme de génération pour une machine à tailler les engrenages pour dentures à développante, comprenant une meule fixe en position par rapport au mouvement de génération, un chariot principal (2) mobile alternativement en translation, monté sur un bâti de machine (10) et un chariot auxiliaire (7) guidé sur le premier et mobile en va-et-vient, qui est relié à un élément coulissant (8) mobile en coulissement dans une glissière (9) réglable en position angulaire portée par le bâti de la machine, le chariot auxiliaire (7) entraînant par l'intermédiaire d'un dispositif d'entraînement à bandes (11) un arc roulant (4) qui est en liaison avec une table porte-pièce (5), et comprenant également au moins un dispositif d'entraînement du mécanisme de génération, caractérisé en ce que le trajet de translation (II) du chariot auxiliaire (7) s'étend obliquement au trajet. de translation (1) du chariot principal (2).

2. Mécanisme de génération selon la revendication 1, caractérisé en ce que le trajet de translation (II) du chariot auxiliaire (7) forme un angle de 45° avec le trajet de translation du chariot principal (2).

3. Mécanisme de génération selon la revendication 1 ou 2, caractérisé en ce que le chariot auxiliaire (7) est relié au dispositif d'entraînement (15, 16, 17) du mécanisme de génération (Fig. 2).

4. Mécanisme de génération selon la revendication 1 ou 2, caractérisé en ce que la table porte-pièce (5) est reliée au dispositif d'entraînement (18, 19) du mécanisme de génération (Fig. 3).

5. Mécanisme de génération selon la revendication 1 ou 2, caractérisé en ce que le chariot principal (2) est relié au dispositif d'entraînement (20, 21) du mécanisme de génération (Fig. 4).

6. Mécanisme de génération selon la revendication 1 ou 2, caractérisé en ce que le chariot auxiliaire (7) et le chariot principal (2) peuvent être entraînés sélectivement par l'intermédiaire de deux dispositifs d'entraînement de génération (16', 17' ; 20', 21') (Fig. 5).

7. Mécanisme de génération selon la revendication 1 ou 2, caractérisé en ce que le chariot principal (2) et la table porte-pièce (5) peuvent être entraînés sélectivement par l'intermédiaire de deux dispositifs d'entraînement de génération (18', 19' ; 20', 21') (Fig. 6).

8. Mécanisme de génération selon l'une des revendications précédentes, caractérisé en ce qu'à chacun du chariot auxiliaire (7) et du chariot principal (2) est relié un détecteur de longueur (22, 23) (Fig. 7).

9. Mécanisme de génération selon l'une des revendications 1 à 7, caractérisé en ce qu'un détecteur de longueur (23) est relié au chariot principal (2) et qu'un détecteur d'angle (24) est relié à la table porte-pièce (5) (Fig. 8).

10. Mécanisme de génération selon l'une des revendications précédentes, caractérisé en ce que le chariot auxiliaire (7) présente un élément (29) de réglage de la profondeur de passe, qui est mobile en translation entre deux butées (31, 32) et peut être immobilisé, en ce que tout l'ensemble peut se déplacer en translation entre deux butées (34, 35) et être immobilisé pour l'exécution du pas, et en ce que la table porte-pièce (5) et l'arc roulant (4) sont munis chacun d'un embrayage (36, 37) (Fig. 9 à 11).

11. Mécanisme de génération selon la revendication 10, caractérisé en ce que les butées sont réglables.

12. Mécanisme. de génération selon la revendication 10, caractérisé en ce que chaque embrayage (36, 37) est constitué par une membrane annulaire (39) pouvant être sollicitée par un fluide, et qui est en liaison active avec une lamelle (41) (Fig. 11, 12).

0 069 274

# Fig.1

# Fig. 2

$\gamma = 0°$

# Fig. 3

# Fig.4

# Fig. 5

# Fig.6

# Fig.7

Fig.8

# Fig.10

# Fig.9

Fig. 11

42

5

43

40

39

41

44

Fig. 12

42

5

43

40

39

41

44